# EUROPEAN PATENT APPLICATION

(11) **EP 1 880 617 A2**
(43) Date of publication of application: **23.01.2008**
(21) Application number: 07252861.5
(22) Date of filing: 19.07.2007
(51) Int. Cl.: A23L 1/212

(54) **Edible fruit product with undulating body or at least partially crenate cross-section**

(30) Priority: 20.07.2006 US 491003
(71) Applicant: Sun-Rype Products Ltd., Kelowna BC V1Y 2W4 (CA)
(72) Inventor: Madsen, John Alan, Kelowna, BC V1P 1E7 (CA); Moore, Darryl Allan, Kelowna, BC V1X 3A2 (CA); Nicholson, Cherry Elizabeth, Kelowna, BC V1W 4L3 (CA); Pozzo, Michael Murray, Kelowna, BC V1V 1N5 (CA)
(74) Representative: Wightman, David Alexander

(57) **Abstract**

An edible snack product comprises an undulating elongated body with a crenate cross-section and a composition that includes fruit material. When the snack product is composed entirely or substantially of fruit material, the snack product tends to be sticky and the undulating body and crenate cross-section serve to reduce the surface area of the snack product that would contact the surfaces of a wrapper, equipment and the consumer. By reducing the surface area contact, the tendency of the snack product to stick to the wrapper, equipment and the consumer is reduced.

## Description

### Field of the Invention

This invention relates generally to an edible product, and in particular to a sticky fruit product particularly suitable for packaging.

### Background of the Invention

Food products containing fruit are increasingly preferred by consumers. This is particularly true when the fruit products contain a high proportion of fruit because such products are often regarded by consumers as being more healthy and nutritious than fruit products which contain more processed/refined sugars, starches, gelatins, gums and preservatives.

Products containing fruit are often sticky, and tend to stick or adhere to other surfaces. These other surfaces could include processing or packaging equipment, product wrappers or packaging, or on a consumer's fingers or face.

Fruit products, such as fruit strips or fruit leathers, often contain long flat surfaces, which tend to stick to processing or packaging equipment, product wrappers or packaging, or on a consumer's fingers or face.

It would be desirable to find ways to reduce the effect of stickiness of sticky fruit products.

### Summary of the Invention

According to one aspect, there is provided an edible product comprising an undulating elongated body having a composition that includes fruit material. According to another aspect, there is provided an edible product comprising an elongated body wherein at least a portion of the cross-section is crenate and having a composition that includes fruit material. This elongated body can also be undulating.

In any of these aspects, the edible product can have a composition that is substantially or entirely consisting of fruit material. Particularly, the edible product can have a composition that includes at least 50% fruit material, or at least 60% fruit material, or at least 70% fruit material, or at least 80% fruit material, or at least 90% fruit material, or consist entirely of fruit material. When the snack product is composed entirely or substantially of fruit material, the snack product tends to be sticky and the undulating body and crenate cross-section serve to reduce the surface area of the snack product that would contact the surfaces of a wrapper, or another object. By reducing the surface area contact, the tendency of the snack product to stick to the wrapper or other object is reduced.

The composition can consist essentially of apple and raspberry concentrates, apple juice concentrate, citrus pectin, natural flavour, natural colour, and lemon and lime juice concentrates. Alternatively, the composition can consist essentially of apple and strawberry concentrates, apple juice concentrate, citrus pectin, natural flavour, natural colour and lemon juice concentrate.

The edible product can have a number of different crenate cross-sectional shapes; one such example is a five point star shape. A snack product having such a shape can be formed by extrusion using an extrusion nozzle having a five point star shaped profile. Such a shape can also be formed by injection molding, or cutting or grinding material from the outside of the product to form a crenate cross-sectional shape. If the product is formed by extrusion, the undulating body can be formed by depositing the extruded snack product onto a conveyor that is moving at a slower pace than the extrusion rate. If the product is formed by injection molding, the mold can have an undulating shape.

### Brief Description of the Drawings

Figure 1 is a first side view of a fruit snack product having an undulating elongated body and a star-shaped cross-section according to one embodiment.
Figure 2 is a top view of the fruit snack product.
Figure 3 is a second side view of the fruit snack product opposite the first side view.
Figure 4 is an end view of the fruit snack product.
Figure 5 is an end view of the opposite end of the fruit snack product.
Figure 6 is a perspective view of the fruit snack product.
Figure 7 is a perspective view of the fruit snack product enclosed within a wrapper.

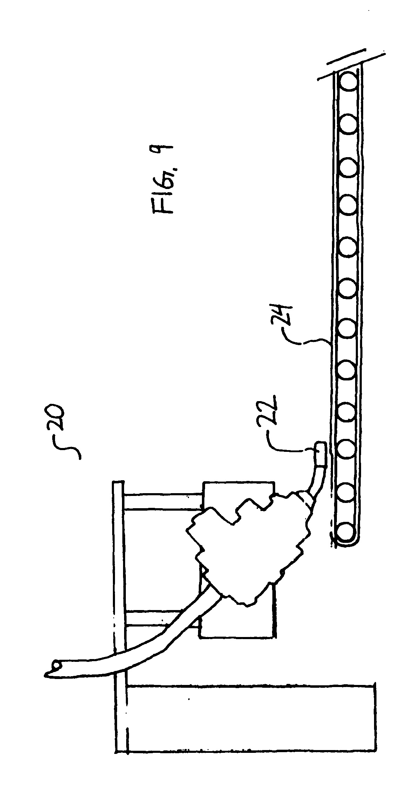

Figure 8 is a perspective view of the fruit snack product in a partially opened wrapper.
Figures 9 is a schematic view of an extrusion and conveying assembly for manufacturing the fruit snack product, according to an exemplary embodiment.
Figure 10 is an end view of an extrusion nozzle of the extrusion and conveying assembly, according to an exemplary embodiment.
Figures 11 and 12 are end views of alternative embodiments of the fruit snack product.
Figure 13 is a top plan view of an alternative embodiment of the fruit snack product.

### Detailed Description of Embodiments of the Invention

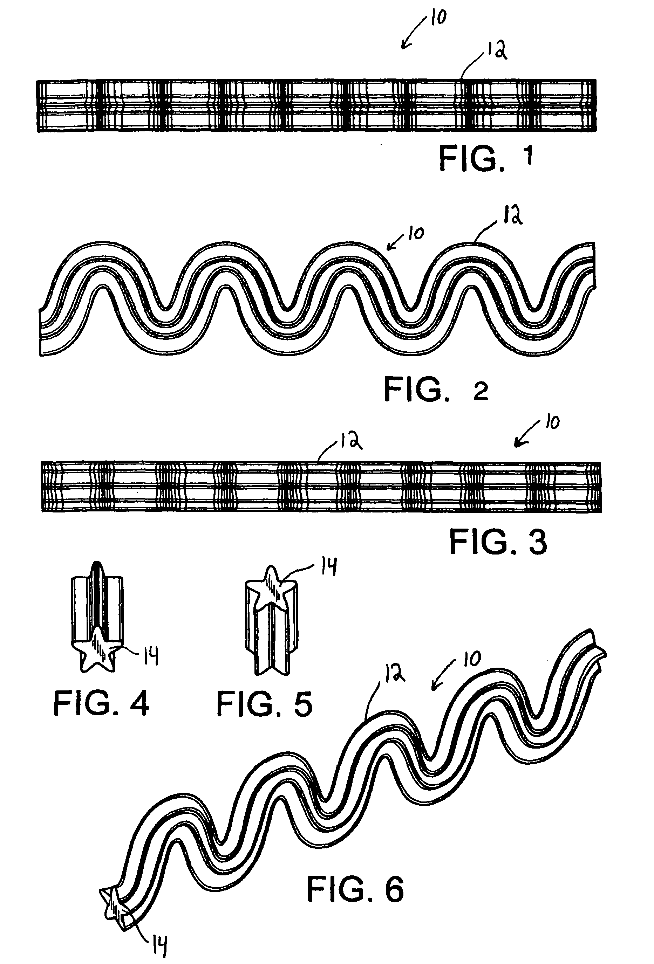

Referring to Figures 1 to 6 and according to one embodiment, an edible snack product 10 has a composition that consists entirely or substantially of fruit material. The snack product 10 when consisting substantially of fruit material can have between 50% to 100% fruit material, alternatively 60% to 100% fruit material, alternatively 70% to 100% fruit material, alternatively 80% to 100% fruit material, and alternatively 90% to 100% fruit material.

The snack product 10 can have a number of different flavours, including without limitation:
o "zesty raspberry" in which the fruit product composition is: apple and raspberry puree concentrates, apple juice concentrate, citrus pectin, natural flavour, natural colour, and lemon and lime juice concentrates; and
o "wild strawberry" in which the fruit product composition is: apple and strawberry puree concentrates, apple juice concentrate, citrus pectin, natural flavour, natural colour, and lemon juice concentrate.

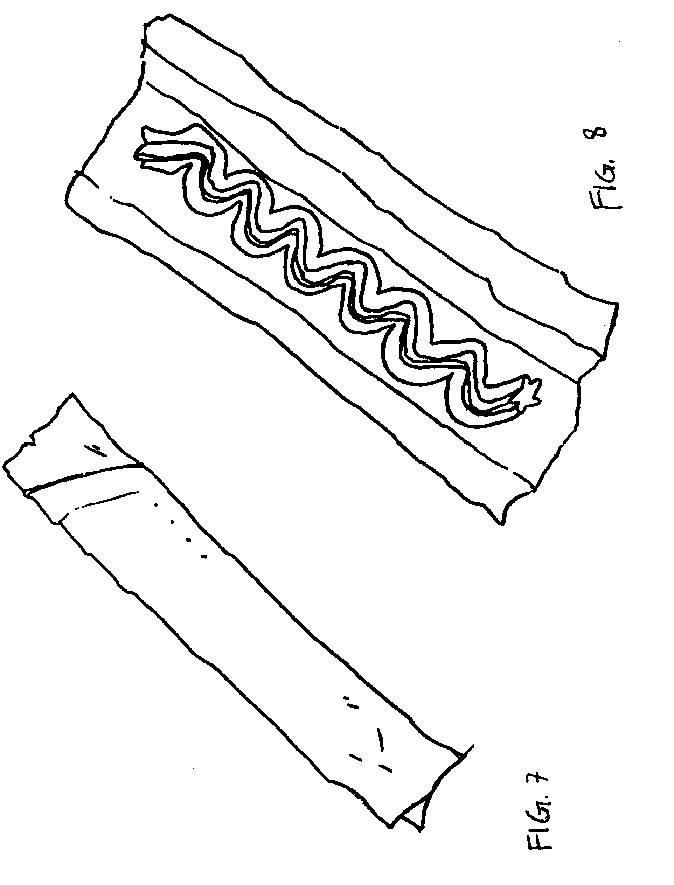

Being entirely or substantially composed of fruit material, the snack product 10 has a sticky, highly viscous consistency. The snack product 10 is also highly elastic. The snack product 10 is formed into a shape comprising an undulating body with a crenate cross-section. This shape is particularly useful to reduce the surface area of the product 10 that contacts the inside surfaces of a metallised multi-layer polymer film wrapper 16 (see Figures 6 and 7). In particular, the snack product 10 has a sinusoidal elongated body 12 having a five point star-shaped cross-section 14 and a solid core. While a sinusoidal elongated body is shown in this embodiment, other types of undulating shapes can be substituted.

By reducing the product's contacting surface area, the tendency for the snack product 10 to stick to the wrapper 16 ("wrapper stickiness") or other objects is reduced. "Stickiness" as referred to in this description refers to a characteristic found in materials that are essentially high viscosity liquids that adhere or stick to a surface. Such materials exhibit the characteristics of liquids, and will "wet" a surface to which they are pressed. Materials that have good adhesion are able to readily flow out on to the substrate surface. The degree of surface contact area, or freeness of the flow often determines the intensity of the adhesion. As only the five edges of the star-shaped cross section 14 contact the wrapper surface 16, the degree to which the food product 10 can flow onto, or make contact with, the wrapper surface 16 is reduced. The exposure to the wrapper surface is further reduced by the sinusoidal body shape, as the peaks and valleys of the sinusoid reduce the contact area between the product and the wrapper surface 16 in the longitudinal direction.

The physical characteristics (including stickiness, elasticity, and viscosity) of the snack product 10 are substantially the same as the "Fruit To Go" fruit snack manufactured and sold by Sun-Rype Products Ltd. While the shape of the snack product 10 is particularly suited to reduce the wrapper stickiness of a product having a stickiness equal to that of the Fruit to Go product, the shape can also be useful to reduce the wrapper stickiness of food products having differing degrees of stickiness. For example, this shape is expected to be particularly useful for products that are stickier than liquorice and gummy candy and less sticky than taffy or chewed gum.

While the snack product shape is particularly suitable for reducing the wrapper stickiness of product made entirely or substantially of fruit material, it is expected that the present invention would also be beneficial to sticky snack product having a lesser fruit content. Such snack product may still be sufficiently sticky that a sinusoidal body and/or crenate cross-section would be beneficial.

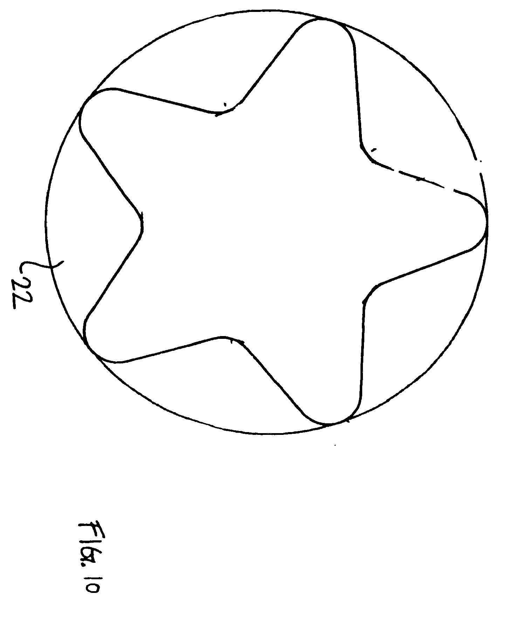

Referring now to Figure 9, the snack product 10 shape can be created by an extrusion and conveying assembly 20. The snack product 10 has a sufficiently low viscosity that it is flowable through the assembly 20. Such viscosity can be achieved in a number of different ways known in the art, e.g. by raising the temperature of the snack product 10 inside the assembly, or increasing the product's water content, or reducing the pectin level. The snack product 10 is fed through the assembly 20 and extruded through an extrusion nozzle 22 having a star-shaped profile as shown in Figure 10 to create the product's star-shaped cross section 14 with a solid core. While a five point star-shaped nozzle is described here, it is within the scope of the invention to use different nozzle profiles to create different cross-sectional shapes. It is expected that a product having any crenate cross-section would enjoy the benefits of a reduced wrapper stickiness. For example the nozzle profile can be star shaped having a different number of points (not shown), or gear shaped having multiple teeth (not shown). In addition, a product having a cross-section of any shape that has protrusions around the body that would create a perimeter having a smaller contact surface area than a body having a cross-sectional shape without protrusions should enjoy a reduced wrapper stickiness. Such shapes are also considered to be crenate cross-sections. Alternatively, the crenate cross sections can be limited to cross sections having a notched edge, and in particular, to a notched edge that forms rounded projections or teeth.

Extruded snack product 10 is deposited onto a conveyor belt 24, which conveys the continuous snack product 10 through a drying process (not shown) to dry the snack product 10 into its final consumable form. After drying, the snack product is conveyed to a cutter (not shown) that cuts the snack product 10 into portions. The conveyor belt 24 is operated at a slower speed than the extrusion rate to create the sinusoidal shape of the body 12. The extrusion rate and the conveyor belt 24 can be separately varied to separately vary the amplitude and frequency of the sinusoid. The extrusion rate can be varied, for example, by varying the pressure applied to the snack product 10 through the extrusion nozzle 22.

In this embodiment, the snack food product 10 has a desired length of between 140 mm and 160 mm, a desired height of 24-26 mm, and a minimum sinusoidal frequency that makes the product 10 suitable for wrapping. However, a snack food product 10 having different dimensions, sinusoidal frequency and cross-sectional shape can be manufactured within the scope of this invention.

After the snack product 10 is cut into discrete portions, the portions are conveyed to a wrapping assembly (not shown) which wrap the snack product 10 into the wrapper 16. Such wrapping assembly may be partially or fully automated. A number of different wrapping assemblies known in the art may be used to wrap the snack product 10 and thus are not described here.

Although a metallised multi-layer polymer film wrapper 16 is particularly desirable because of its low adhesiveness, other wrapping material having similar adhesive properties can be substituted within the scope of the invention. For example, the wrapper may be any multi layer polymer, metallised polymer, fiber, or flexible multi layer, co-extruded, or laminated material. The wrapper 16 comprises a pair of rectangular sheets joined together at their edges to form a space therebetween to contain the snack product 10.

Another advantage provided by the snack product shape is that the snack product 10 does not generally roll when being conveyed to the wrapping assembly, thereby making the snack product 10 easier to wrap.

Although extrusion is a particularly suitable method of manufacturing the snack product 10, other methods can be employed to make the snack product 10. For example, the snack product 10 can be created by injection molding, wherein the snack product 10 has a sufficiently low viscosity to be discharged from an injection nozzle (not shown) into a star-shaped sinusoidal mold. As another example, a cylindrical snack product 10 can be shaped into a sinusoidally elongated form and ridges can be cut around the perimeter of the body to form the crenate cross-sectional shape.

While the snack product 10 preferably has both a sinusoidal elongated body and a crenate cross-sectional shape to provide the maximum benefit, the snack product 10 can still enjoy some degree of reduced wrapper stickiness when the snack product 10 only has an undulating body (no crenate cross section) as shown in Figure 11, or only has a crenate cross-section (no undulating body) as shown in Figure 13.

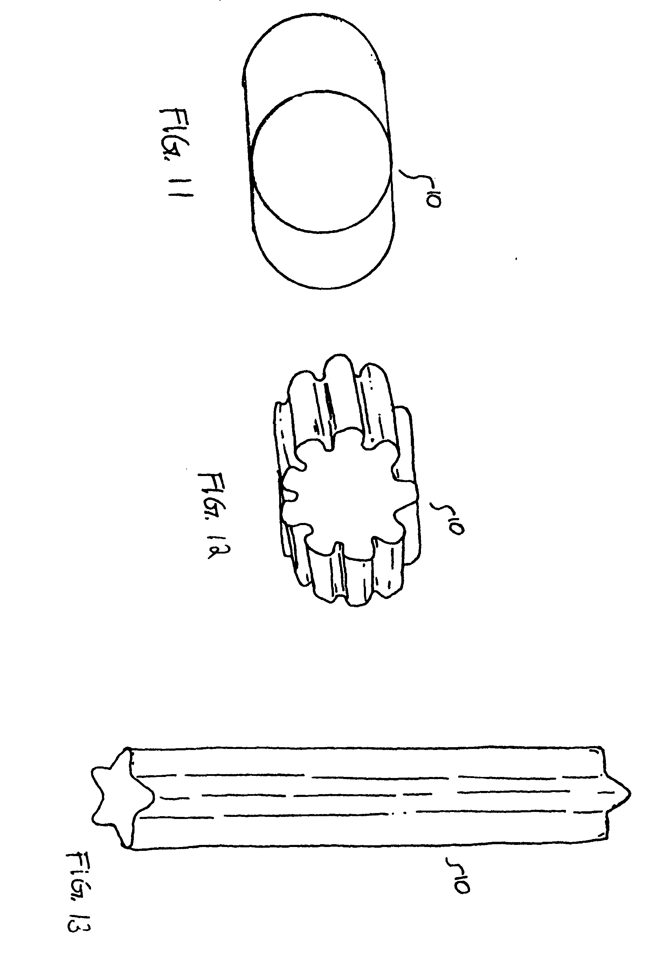

According to an alternative embodiment, the snack product 10 can have a different crenate cross section other than a five pointed star shape. For example and as shown in Figure 12, the cross section can be "gear tooth", triangular, flower, or any shape that has protrusions. While the protrusions in the star shaped product 10 of the present embodiment extend the entire length of the product 10, such protrusions can extend intermittently along the length of the body and serve to reduce the contact surface area of the product 10.

According to yet another alternative embodiment, the snack product 10 has a twisted or braided elongate body shape (not shown) instead of an undulating body shape. Such twisted and braided body shapes also serve to reduce the surface area of the product which would contact the wrapper or other surface.

While specific embodiments of the invention have been described and illustrated such embodiments should be considered illustrative of the invention only and not as limiting the invention as construed in accordance with the accompanying claims.

## Claims

1. An edible product comprising an undulating elongated body having a composition that includes fruit material.

2. An edible product comprising an elongated body wherein at least a portion of the cross-section is crenate and having a composition that includes fruit material.

3. An edible product comprising an undulating elongated body wherein at least a portion of the cross-section is crenate and having a composition that includes fruit material.

4. An edible product as claimed in any of claims 1 to 3 wherein the composition includes at least 50% fruit material.

5. An edible product as claimed in any of claims 1 to 3 wherein the composition includes at least 60% fruit material.

6. An edible product as claimed in any of claims 1 to 3 wherein the composition includes at least 70% fruit material.

7. An edible product as claimed in any of claims 1 to 3 wherein the composition includes at least 80% fruit material.

8. An edible product as claimed in any of claims 1 to 3 wherein the composition includes at least 90% fruit material.

9. An edible product as claimed in any of claims 1 to 3 wherein the composition consists entirely of fruit material.

10. An edible product as claimed in claim 4 wherein the composition consists essentially of apple and raspberry concentrates, apple juice concentrate, citrus pectin, natural flavour, natural colour, and lemon and lime juice concentrates.

11. An edible product as claimed in claim 4 wherein the composition consists essentially of apple and strawberry concentrates, apple juice concentrate, citrus pectin, natural flavour, natural colour and lemon juice concentrate.

12. An edible product as claimed in any of claims 1 to 11 further comprising a twisted body.

13. An edible product as claimed in any of claims 1 to 11 further comprising a braided body.

14. An edible product as claimed in any of claims 1 to 13 wherein the crenate cross-section comprises a notched edge.

15. An edible product as claimed in claim 14 wherein the crenate cross section is star-shaped.
